# EUROPÄISCHE PATENTSCHRIFT

(11) **EP 2 175 220 B1**
(45) Veröffentlichungstag und Bekanntmachung des Hinweises auf die Patenterteilung: **29.05.2013**
(21) Anmeldenummer: 09012052.8
(22) Anmeldetag: 22.09.2009
(51) Int. Cl.: F28D 9/00, F28F 3/10

(54) **Plattenwärmeübertrager und eine Anordnung aus einem solchen und einer Fluidheizung**
Plate heat exchanger and an assembly of same and a fluid heater comprising such
Echangeur de chaleur à plaques et agencement composé d'un tel échangeur thermique à plaques et d'un chauffage à fluide

(30) Priorität: 09.10.2008 DE 102008051091
(43) Veröffentlichungstag der Anmeldung: 14.04.2010
(73) Patentinhaber: Bleckmann GmbH & Co. KG, 5112 Lamprechtshausen (AT)
(72) Erfinder: Pleschinger, Andreas, 5205 SCHLEEDORF (AT); Teufl, Gernot, 5400 Hallein (AT)
(74) Vertreter: Eisenführ, Speiser & Partner

(56) Entgegenhaltungen:
- WO-A1-2006/051102
- CA-A1- 2 416 508
- US-A- 5 775 410

## Beschreibung

Die Erfindung betrifft einen Plattenwärmetauscher zum Austausch von Wärme zwischen zwei strömungsfähigen Medien gemäß dem Oberbegriff des Patentanspruchs 1 und eine Anordnung aus einem solchen Plattenwärmetauscher und einer Fluidheizung. Weiterhin betrifft der Anmeldegegenstand zusätzlich eine Anordnung aus einem solchen Plattenwärmeübertrager bzw. Plattenwärmetauscher und einer Fluidheizung. Ein derartiger Plattenwärmetauscher ist z.B. aus der CA-A1-2 416 508 bekannt.

Im Besonderen betrifft die Erfindung einen Plattenwärmetauscher zum Austausch von Wärme zwischen zwei strömungsfähigen Medien, der aus mindestens einem Flachmaterial besteht, sowie einer oberen und einer unteren Abdeckung für das Flachmaterial zur Ausbildung von Strömungskanälen zwischen dem Flachmaterial und der oberen Abdeckung sowie dem Flachmaterial und der unteren Abdeckung.

Es ist bekannt, beispielsweise in Kraftfahrzeugen oder in Heizungsanlagen Wärmetauscher einzusetzen, um einem wärmeren Medium Energie in Form von Wärme zu entziehen und diese Wärme einem anderen Medium wieder zuzuführen. Dabei wird beispielsweise das wärmere Medium an einer Seite einer geeigneten Austauschfläche vorbeigeführt. An der anderen Seite der Austauschfläche wird das kühlere Medium entlang geführt. Das wärmere Medium gibt seine Wärme zunächst an die Austauschfläche und dann über die Austauschfläche an das kühlere Medium ab. Ein Wärmeaustausch findet solange statt, bis sich die Temperaturen der Medien angeglichen haben. Die Austauschfläche ist dabei so gestaltet, dass sie die Medien physisch voneinander trennt, um ein Vermischen zu verhindern, oder einfach um ein Medium führen zu können, wie z. B. beim Wasserkühler in einem KFZ. Dies ist besonders dann wichtig, wenn die Medien in getrennten geschlossenen Kreisläufen geführt werden oder eines der Medien aggressiv oder umweltschädlich ist.

Einen solchen Wärmetauscher zeigt die DE 699 24 647 T2. Der Plattenwärmetauscher besteht aus einer Reihe von zueinander parallel angeordneten, annähernd rechteckigen Platte mit dazwischen liegenden Hohlräumen. Zumindest im Bereich der Ecken sind Anschlussöffnungen angeordnet, zum Anbringen von Zu-und Ablaufventilen. Die übrigen Platten weisen mit den Anschlussöffnungen korrespondierende Öffnungen auf. Um die Hohlräume in der gewünschten Weise von den Medien durchströmen zu lassen, weisen die Öffnungen jeweils einen von der Platte abstehenden Rand auf. Diese Ränder sind so gestaltet und ausgerichtet, dass sie einen Fluidstrom in den Hohlraum zwischen die betreffenden Platten verhindern oder gestatten. Ebenso weisen die Ränder der Platten einen solchen Rand auf, um die Hohlräume zwischen den Platten gegen die Umgebung fluiddicht zu verschließen. Die Platten bestehen aus einem metallischen Werkstoff und die fluiddichte Abdichtung wird durch eine Verlötung der Ränder erreicht.

Die DE 198 21 627 A1 zeigt ein Modul aus Polymermaterialien, das beliebige Mikrokanalsysteme enthält und ein Verfahren zur Herstellung eines solchen Moduls.

Die US 1,961,660 zeigt eine plattenförmige Vorrichtung zum Erhitzen und Abkühlen von Flüssigkeiten wie z.B. Milch, (Bier-)Würze, Bier u.Ä. Hierbei ist zwischen einer Basis und einer Deckplatte eine elastische Schicht mit einem gewundenen durchgehenden Schlitz als Flüssigkeitsführung vorgesehen.

Die IT 12 42 161 B betrifft eine automatische Maschine zur Herstellung kalten Espresso-Kaffees mit einer Kombination aus Heizkessel und Wärmetauscher.

Die US 3,314,471 betrifft eine Vorrichtung zur Wärmebehandlung von Flüssigkeiten unter Einbeziehung von einem oder mehreren Stufen der Abwärmenutzung, in welchen in die Wärmebehandlungsstufen strömende Flüssigkeit mit bereits wärmebehandelter Flüssigkeit indirekt Wärme austauscht.

Die DE 29 49 361 A1 zeigt einen Plattenkühler für wassergekühlte Kompressoren, bei welchem von Flachdichtungen gegeneinander abgedichtete Platten mit Durchbrechungen für die Zufuhr und Abfuhr von Kühlwasser und Druckluft versehen sind. Am Rand der Platten sind Bohrungen vorgesehen, um die Plattenstapel miteinander zu verschrauben sowie Entlastungsnuten, um im Falle eines Dichtungsdefektes ein Übertritt der Fluiden in den jeweils anderen Kreislauf zu verhindern. Dabei sind in allen Platten Vertiefungen vorgesehen, welche mit Vertiefungen jeweils benachbarter Platten Kanalelemente zwischen jeweiligen Durchbrechungen für die Zufuhr und Abfuhr von Kühlwasser und Druckluft bilden.

Die US 4,162,703 zeigt einen weiteren Wärmetauscher, der aus einzelnen übereinander geschichteten Platten besteht. Zur Herstellung von Strömungskanälen weisen die Platten mehrere Reihen von korrespondierenden Öffnungen auf. Um diese Öffnungen verläuft jeweils ein von der Platte abstehender Rand, der so ausgerichtet ist, dass der Zulauf in den entsprechenden Zwischenraum zwischen zwei benachbarte Platten für eine Reihe an Öffnungen gesperrt und für eine parallel verlaufende zweite Reihe geöffnet ist. Auf diese Weise werden einander benachbarte aber voneinander getrennte Strömungskanäle für die beiden Medien geschaffen. In einer weiteren Ausführung sind gewellte Platten so übereinandergestapelt, dass die Wellenberge der unteren Platte mit den Wellentälern der oberen Platte zusammenfallen und so Strömungskanäle zwischen den Platte ausgebildet werden. Zur Abdichtung der Zwischenräume an den Rändern der Platte ist eine umlaufende Nut vorgesehen, in die ein Dichtring eingelegt ist. Ebenso können die Ränder der Öffnungen in den Platten durch entsprechende Dichtringe ersetzt werden. Als Material wird für die Platten Kunststoff, Aluminium oder ein anderes geeignetes Material vorgeschlagen, daher kommt sowohl ein Schweiß- oder Lötverfahren wie auch ein Klebeverfahren in Betracht, um die Platten abdichtend aneinanderzufügen.

Die vorgenannten bekannten Plattenwärmetauscher weisen Nachteile auf. So sind zum Befestigen der Platten untereinander Schweiß-, Löt- oder Klebeverfahren nötig. Diese erfordern einen technischen Aufwand sowohl an Maschinen, wie auch Arbeitszeit. Weiterbin bergen Löt-, Schweiß- oder Klebenähte die Gefahr von Undichtigkeiten und damit Fehlfunktionen des Wärmetauschers. Weiterhin wird bei Auftreten einer Undichtigkeit aufgrund der nicht ohne Weiteres lösbaren Löt-, Schweiß- oder Klebeverbindung in der Regel der gesamte Wärmetauscher unbrauchbar.

Daher ist es Aufgabe der vorliegenden Erfindung einen Plattenwärmetauscher bereitzustellen, der die vorgenannten Nachteilen überwindet.

Es ist weiterhin Aufgabe der vorliegenden Erfindung einen Plattenwärmetauscher bereitzustellen, der einfach und insbesondere kostengünstig herzustellen ist.

Die vorstehende Aufgabe wird mit einem Plattenwärmetauscher zum Austausch von Wärme zwischen zwei strömungsfähigen Medien gemäß Anspruch 1 sowie eine Anordnung aus einem Plattenwärmetauscher und einer Fluidheizung in einer Vorrichtung zur Herstellung eines Heißgetränks gemäß Anspruch 23 gelöst. Vorteilhafte Ausführungsbeispiele und Weiterbildungen des Plattenwärmetauschers sind in den sich anschließenden Unteransprüchen 2 bis 23 angegeben.

Insbesondere wird ein Plattenwärmetauscher zum Austausch von Wärme zwischen zwei strömungsfähigen Medien vorgeschlagen. Dieser besteht aus mindestens einem Flachmaterial sowie einer oberen und einer unteren Abdeckung für das Flachmaterial zur Bildung von Strömungskanälen zwischen dem Flachmaterial und der oberen Abdeckung sowie dem Flachmaterial und der unteren Abdeckung und zwischengelegte Dichtelemente für eine mediumsdichte Abdichtung der Strömungskanäle.

Für den erfindungsgemäßen Plattenwärmetauscher wird insbesondere vorgeschlagen, die obere Abdeckung mit Schnappelementen und die untere Abdeckung mit korrespondieren Schnappelementen auszuführen. Bevorzugt sind in dem Flachmaterial an vorbestimmten Stellen Ausnehmungen zum Durchgreifen bzw. einen Durchgriff der Schnappelemente und/oder der korrespondierenden Schnappelemente durch das Flachmaterial vorgesehen. Die jeweiligen zwischengelegten Dichtelemente sind durch Verrasten der Schnappelemente und der korrespondierenden Schnappelemente zur Verspannung des jeweiligen Flachmaterials und der Abdeckungen komprimiert. Mittels des jeweils zwischengelegten Dichtelements zwischen der jeweiligen Abdeckung und dem Flachmaterial werden die obere und untere Abdeckung durch eine vorbestimmte Komprimierung der Dichtelemente gegeneinander verspannt. Diese besondere Verspannung der Abdeckungen ermöglicht eine einfache und sichere Montage des Plattenwärmetauschers. Insbesondere wird damit die Verwendung von kostengünstigen Materialien für die Dichtelemente ermöglicht. Vor allem ist zu erwähnen, dass auf Verwendung nicht FDA-konformer Stoffe, wie beispielsweise einem Primer zur Vorbereitung von Kunststoffen bei gespitzten Silikondichtungen verzichtet werden kann. Aufgrund der erfindungsgemäßen Schnappelemente kann weiter auf zusätzliche Befestigungselemente verzichtet werden, wodurch sich die Teilezahl und somit zusätzlich die Kosten reduzieren.

In einer Weiterbildung besitzt der Plattenwärmetauscher an der oberen Abdeckung und/oder unteren Abdeckung jeweilige weitere Schnappelemente, wobei weitere Strömungskanäle mittels eines weiteren Flachprofils, einer entsprechenden weiteren Abdeckung mit korrespondierenden Schnappelementen und entsprechender weiterer einen Strömungskanalverlauf definierender zwischengelegter Dichtelemente für die mediumsdichte Abdichtung der Strömungskanälen ausgebildet sind. Auf diese Weise ist eine einfache Erweiterung der wirksamen Wärmetauschfläche des Plattenwärmetauschers, also eine Erhöhung der Wärmetauscherleistung möglich.

Das Flachmaterial trennt die aneinander vorbeiströmenden Medien, zwischen denen beim Vorbeiströmen ein Wärmeaustausch über das Flachmaterial stattfindet. Dabei ist es weiterhin vorteilhaft, wenn das Flachmaterial zumindest im Bereich der Strömungskanäle eine Profilierung aufweist. Durch diese Profilierung wird eine Vergrößerung der effektiven Wärmeaustauschfläche und somit eine Erhöhung des Wirkungsgrads erreicht.

In einem bevorzugten Ausführungsbeispiel weisen die Schnappelemente lineare hakenförmige Rastelemente auf, die mit den ebenfalls linearen lang gestreckten korrespondierenden Schnappelementen Rastelementpaare für eine Rastverbindung bilden. Eine solche Ausführung ermöglicht ein einfaches und sicheres Verbinden der Abdeckungen und des Flachmaterials, wobei bei entsprechender Ausgestaltung der Schnappelemente ein Lösen der miteinander verbundenen Teile möglich bleibt. Die linearen lang gestreckten Schnappelemente verteilen im Gegensatz zu punktförmig ausgebildeten Schnappverbindungen den zum fluiddichten Verbinden notwendigen Druck auf eine größere Fläche.

In einer weiterhin bevorzugten Ausführung sind in dem Flachmaterial und den Abdeckungen korrespondierende Öffnungen zur Bildung von jeweiligen Mündungen für Mediumszuläufe und Mediumsabläufe für die Strömungskanäle vorgesehen. Mit den entsprechend gestalteten und zwischen dem Flachmaterial und den Abdeckungen angeordneten Dichtelementen lassen sich auf einfache Weise Strömungskanäle mit den gewünschten Zu- und Abläufen realisieren.

In einer besonderen Ausführungsform sind die Öffnungen der Mündungen für die Mediumszuläufe und Mediumsabläufe der Kreisläufe des Plattenwärmetauschers in einem Bereich der Abdeckungen und des Flachmaterials zusammengefasst. Damit sind die Öffnungen der Mündungen für die Mediumszuläufe und Mediumsabläufe in dem Bereich der Abdeckungen und des Flachmaterials, in dem sie zusammengefasst sind, durch ein Anschlusselement gemeinsam anschließbar. Ein solcher Aufbau ermöglicht eine einfache Installation des erfindungsgemäßen Wärmetauschers in Anordnungen mit anderen Komponenten beispielsweise einem Haushaltsgerät, insbesondere einem Gerät zur Herstellung von Kaltgetränken, die durch einen Aufbrühvorgang zubereitet werden. Als Beispiele seien Produkte wie kalter Kaffee ("Cold Coffee") zur Zubereitung von Eiskaffee ("Ice Coffee") oder auch Eistee ("Ice Tea") genannt.

In einer bevorzugten Ausführung wird der Verlauf der Strömungskanäle durch die zwischengelegten Dichtelemente, das heißt, durch die Form der Dichtelemente, festgelegt. Mit anderen Worten, der Verlauf der Strömungskanäle kann durch entsprechende Formgebung der Dichtelemente leicht variiert und anderen Anforderungen angepasst werden. Insbesondere kann, je nach Anwendungsbedarf, bei vorgegebenem Raum für den Wärmetauscher über den Fluiddurchsatz der gewünschte Wirkungsgrad bzw. eine erforderliche Wärmetauschleistung eingestellt werden.

Um einen ordnungsgemäßen Sitz der Dichtelemente zu gewährleisten und beispielsweise ein Verrutschen der Dichtelemente während der Montage zu verhindern können das Flachmaterial und/oder die Abdeckungen der Form der zwischengelegten Dichtelemente angepasste Vertiefungen zur Lagefixierung der Dichtelemente aufweisen.

Prinzipiell können für den Wärmetauscher verschiedenste Materialien eingesetzt werden. Da Metall ein guter Wärmeleiter ist, ist es vorteilhaft, wenn das Flachmaterial aus einem Metall besteht. Andere Werkstoffe mit guten Wärmeleitungseigenschaften können ebenfalls eingesetzt werden

Da Kunststoff wärmeisolierend wirkt, ist es vorteilhaft, wenn die Abdeckungen aus Kunststoff bestehen. Außerdem wird durch den Einsatz von Kunststoff gegenüber Metall das Gesamtgewicht des Wärmetauschers reduziert.

Da die erforderliche Abdichtung der Strömungskanäle durch vorbestimmte Komprimierung der Dichtungselemente erreicht wird, ist ein Verkleben der Dichtung mit den Abdeckungen nicht erforderlich. Daher kann zum Einen auf den Einsatz teurer Silikondichtungen verzichtet werden, außerdem entfällt wie bereits oben erwähnt damit eine chemische Vorbehandlung der Abdeckungen mittel eines Primers. Dies ist besonders im Hinblick auf einen Einsatz im Lebensmittelbereich wichtig, da derartige Chemikalien meist nicht FDA-konform bzw. lebensmittelecht sind. Damit stehen als Dichtungsmaterialien für die Dichtungselemente besonders geeignete thermoelastische Elastomer zur Verfügung. Dies ist auch ein erheblicher Kostenvorteil gegenüber den auf Silikon basierenden Dichtungen.

In einer besonderen Ausführung des Plattenwärmetauschers sind ein erstes und ein zweites parallel zueinander angeordnetes Flachmaterial durch eine dazwischenliegende Innenwandung zur Ausbildung von ersten und zweiten Strömungskanälen voneinander getrennt. Weiterhin ist die obere und die unter Abdeckung zur Bildung dritter und vierter Strömungskanäle jeweils parallel zu dem ersten und zweiten Flachmaterial angeordnet. Durch diese Anordnung entsteht aus wenigen Einzelelementen ein Plattenwärmetauscher mit vier voneinander getrennten Strömungsebenen.

In dieser Ausführung ist es vorteilhaft, wenn die Innenwandung sich zu beiden Seiten im Wesentlichen senkrecht zur Innenwandung erstreckende Schnappelemente aufweist sowie die obere und untere Abdeckung jeweils in Richtung der Innenwandung gerichtete und mit deren Schnappelementen korrespondierende Schnappelemente aufweisen. Dadurch lassen sich das erste und zweite Flachmaterial und die Abdeckungen einfach und sicher miteinander verbinden.

Es ist weiterhin vorteilhaft, wenn zur mediumsdichten Abdichtung des ersten, zweiten, dritten und vierten Strömungskanals gegeneinander sowie gegen die Umgebung und zur Festlegung des Verlaufs der Strömungskanäle jeweilige Dichtelemente zwischen das jeweilige Flachmaterial und die jeweils benachbarte obere und untere Abdeckungen bzw. Innenwandung eingelegt sind. Dabei kann ein Dichtelement so gestaltet sein, dass es die Abdichtung und die Strömungskanäle einer ganzen Plattenwärmetauscherebene bildet.

In der bevorzugten Ausführung werden die jeweiligen zwischengelegten Dichtelemente durch Verrasten der Schnappelemente und korrespondierenden Schnappelemente in vorbestimmter Weise zur mediumsdichten Abdichtung sowie zur Verspannung des jeweiligen Flachmaterials und der Abdeckungen komprimiert. Diese vorbestimmte und nach der Montage des Plattenwärmetauschers bleibende Komprimierung gewährleistet sowohl die dauerhafte Dichtigkeit wie auch die Haltekraft für die Schnappverbindung.

Weisen die obere und untere Abdeckungen sowohl entlang ihres Flächenrandes als auch auf der Fläche angeordnet Schnappelemente auf, verteilt sich der durch die Komprimierung des Dichtelements entstehende Druck annähernd gleichmäßig über die gesamte Fläche des Wärmetauschers und verbessert so die Dichtigkeit.

Diese wird weiter dadurch verbessert, dass die Dichtelemente überwiegend im Bereich der Schnappelemente und korrespondierenden Schnappelemente bzw. Gegenschnappelemente angeordnet sind, da der durch die Komprimierung des Dichtelements entstehende Druck dort am größten ist, wo sich das Dichtelement und die Schnappelemente und korrespondierenden Schnappelemente am nächsten sind.

In einer Weiterbildung weist die Innenwandung auf beiden Seiten einen umlaufenden erhöhten Rand auf, der das jeweilige Flachmaterial und die obere und untere Abdeckung einfasst, wobei der erhöhte Rand der Innenwandung zu den entlang des Flächenrandes der oberen und unteren Abdeckungen angeordneten Schnappelementen korrespondierende Schnappelemente aufweist. Ein an diesem Rand umlaufendes Dichtelement dichtet sicher die Zwischenräume zwischen dem Flachmaterial und den Abdeckungen gegen die Umgebung ab.

Ein weiterer Aspekt der Erfindung besteht in einer besonders vorteilhaften Anordnung aus einem erfindungsgemäßen Plattenwärmetauscher und einer Fluidheizung in einer Vorrichtung zur Herstellung eines Heißgetränks, wobei der Plattenwärmetauscher und die Fluidheizung derart miteinander verbunden sind, dass ein Fluidablauf eines ersten Kreislaufs des Plattenwärmetauschers mit einem Zulauf der Fluidheizung verbunden ist, der Ablauf der Fluidheizung mit einem Zulauf einer Brühgruppe zur Herstellung des Heißgetränks verbunden ist, ein Ablauf der Brühgruppe mit einem zweiten Kreislauf des Plattenwärmetauschers verbunden ist, wobei im Plattenwärmetauscher der erste und zweite Kreislaufes zur gegenseitigen Wärmeübertragung eingerichtet sind, und ein Zulauf des ersten Kreislaufes zur Zuführung eines Fluids in die Anordnung und ein Ablauf des zweiten Kreislaufs zur Abgabe des Fluids aus der Anordnung bestimmt sind.

Die erfindungsgemäße Anordnung aus einem erfindungsgemäßen Plattenwärmetauscher und einer Fluidheizung ermöglicht die Herstellung eines heiß zuzubereitenden Kaltgetränks, beispielsweise für die Zubereitung von kaltem bzw. gekühlten Kaffee für Eiskaffee oder kaltem bzw. gekühltem Tee, wobei das Verfahren die Schritte aufweist: Vorwärmen von zugeführten Fluid vom Fluidzulauf des Plattenwärmetauschers im ersten Kreislauf; Aufheizen des angewärmten Fluids aus dem ersten Kreislauf der Fluidheizung auf eine vorbestimmte Temperatur für die Zubereitung des Heißgetränks in der Fluidheizung; Herstellen des Heißgetränks in der Brühgruppe mit dem aufgeheizten Fluid; Abkühlen des Heißgetränks im zweiten Kreislaufs des Plattenwärmetauschers durch Abgabe von Wärme an das Fluid im ersten Kreislauf, durch Vorbeiführen des Heißgetränks des zweiten Kreislaufs am Fluid des ersten Kreislaufs; und Abgeben des abgekühlten Heißgetränks am Fluidablauf des Plattenwärmetauschers. In besonders bevorzugten Ausführungen ist das Fluid Wasser oder Milch.

Bei der Durchführung des vorstehend geschilderten Verfahrens mit der vorstehend geschilderten Anordnung wird ein einem Fluidzulauf des Plattenwärmetauscher zugeführtes Fluid, z. B. Milch oder Wasser, zur Temperaturerhöhung im ersten Kreislauf des Plattenwärmetauschers an erwärmten Fluid, d. h. dem gebrühten Heißgetränk, im zweiten Kreislauf des Plattenwärmetauschers vorbeigeführt, dann das aus dem ersten Kreislauf abgeführte Fluid, d. h. das heiße Wasser bzw. die erwärmte Milch, der Fluidheizung zugeführt und auf eine vorbestimmte Temperatur aufgeheizt, und schließlich zur Temperaturabsenkung wird das aufgeheizte Fluid, d. h. das Heißgetränk, in den zweiten Kreislauf des Plattenwärmetauschers zugeführt, um Wärme an das den ersten Kreislauf des Plattenwärmetauschers durchfließende Fluid abzugeben. Das Fluid steht dann an einem Fluidablauf des Plattenwärmetauschers zur weiteren Verwendung zur Verfügung, d. h. zur Abgabe in ein Trinkgefäß und anschließenden Verzehr. So kann die der Fluidheizung zugeführte Energie, beispielsweise zum Erreichen einer Maximaltemperatur, durch die Rückführung des Fluids nach dem Durchlaufen der Fluidheizung in den zweiten Kreislauf des Plattenwärmetauschers zumindest teilweise wieder zurückgewonnen werden. Dadurch verbessert sich die Gesamtenergiebilanz einer solchen Anordnung.

Weitere vorteilhafte Ausgestaltungen sowie Ausführungsbeispiele der Erfindung werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Es zeigen:
- Fig. 1: die Explosionszeichnung eines Ausführungsbeispiels der erfin- dungsgemäßen Plattenwärmetauschers;
- Fig. 2: zeigt eine stark vereinfachte Querschnittdarstellung des Plat- tenwärmetauschers der Fig. 1, um eine bevorzugte Fluidfüh- rung des Primär- und Sekundärkreises zu veranschaulichen;
- Fig. 3: eine Schnittdarstellung eines Verbindungsabschnitts des Plat- tenwärmetauschers entsprechend Fig. 1;
- Fig. 4: eine Schnittdarstellung eines Randabschnitts des Plattenwär- metauschers entsprechend Fig. 1;
- Fig. 5: eine perspektivische Ansicht des Flachmaterials mit einem aufgespritzten Dichtelement entsprechend Fig. 1; und
- Fig. 6: ein Blockschaltbild des erfindungsgemäßen Wärmetauschers mit einem nachgeschalteten weiteren Wärmetauscher in einem Hausgerät zur Herstellung von heiß zuzubereitenden Kaltge- tränken.

Die nachstehend beschriebenen Ausführungsbeispiele des erfindungsgemäßen Plattenwärmetauschers kommen beim Austausch von Wärme zwischen zwei strömungsfähigen Medien, insbesondere flüssigen Medien, im Bereich der Zubereitung von Lebensmitteln, insbesondere heiß zuzubereitenden Kaltgetränken, zum Einsatz.

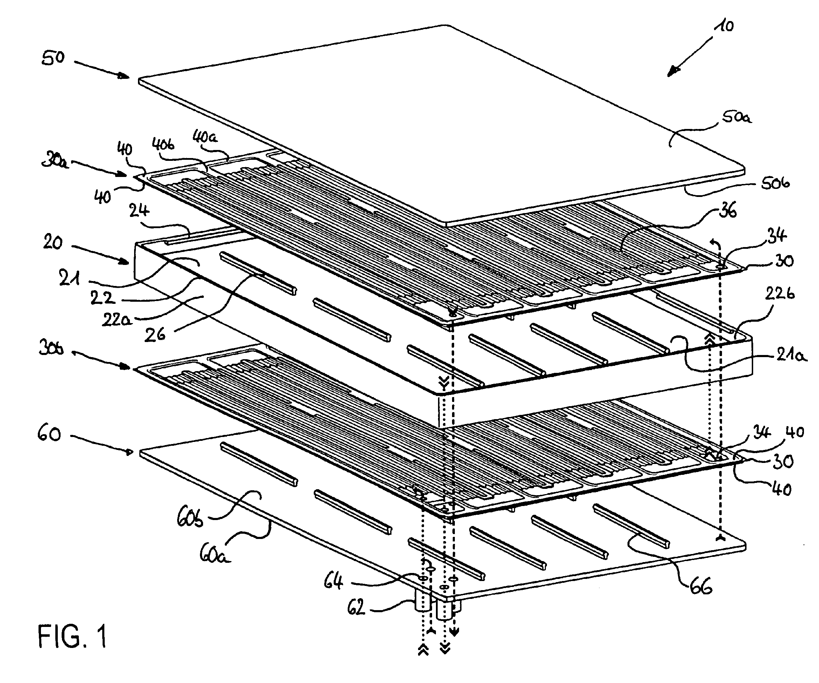

Fig. 1 zeigt die Explosionszeichnung eines Ausführungsbeispiels eines erfindungsgemäßen Plattenwärmetauschers 10. Dieser besteht aus einer ersten Innenwandung 20, Flachmaterial 30, von dem jeweils ein erstes und ein zweites Flachmaterial 30a, 30b oberhalb bzw. unterhalb der ersten Abdeckung 20 angeordnet ist sowie einer oberhalb des ersten Flachmaterials 30a angeordneten oberen Abdeckung 50 und einer unterhalb des zweiten Flachmaterials 30b angeordneten unteren Abdeckung 60.

Die Innenwandung 20 besteht bevorzugt aus Kunststoff und besitzt ein im Wesentlichen rechteckiges ebenes Flächenelement 21. Die Innenwandung 20 weist einen um das Flächenelement 21 umlaufenden Rand 22 auf, der senkrecht zu dem Flächenelement 21 ausgerichtet ist und sich gleichmäßig zu seinen beiden Seiten erstreckt. Die Außenseite 22a des Randes 22 ist eben mit abgerundeten Ecken. Auf der Innenseite 22b des Randes 22 sind an der von dem Flächenelement 21 wegweisenden Kante nach innen gerichtete Schnappelemente 24, auf die später genauer eingegangen wird, angebracht. Die Schnappelemente 24 besitzen eine lineare Ausdehnung und verlaufen parallel zum Rand 22 und sind gleichmäßig mit Abstand zueinander an der Innenseite 22b des Randes 22 verteilt.

Auf dem Flächenelement 20a sind weitere Schnappelemente 26, auf die ebenfalls später genauer eingegangen wird, angeordnet. Diese besitzen ebenfalls eine im Wesentlichen lineare Ausdehnung. Im dargestellten Ausführungsbeispiel sind auf der Oberseite 21a des Flächenelements 21 vier parallele Reihen mit jeweils drei linear ausgerichteten Schnappelementen 26 angeordnet. Es versteht sich, dass auch auf der Unterseite 21 b des Flächenelements 21 in der Figur verdeckte Schnappelemente 26 in identischer Weise angeordnet sind.

Das erste und zweite Flachmaterial 30a, 30b besteht bevorzugt aus einem gut Wärme leitenden Metall und hat bevorzugt eine Stärke von unter 1 mm. Die beiden Flachmaterialien 30a, 30b sind im Wesentlichen gleich aufgebaut, weshalb sich deren Beschreibung auf ein Flachmaterial 30 beschränken kann.

Das Flachmaterial 30 ist im Wesentlichen rechteckig. Seine Ausdehnung ist so gewählt, dass sie der durch den Rand 22 der Innenwandung 20 gebildeten Öffnung entspricht und in dieser spielfrei aufgenommen wird. Das Flachmaterial dient als Wärmeaustauschfläche zwischen den Medien, zwischen denen Wärme ausgetauscht werden soll. Es weist zumindest abschnittsweise eine Profilierung 32 auf, um die effektive Austauschfläche zu vergrößern und so den Wirkungsgrad des Wärmetauschers zu verbessern. In der Fläche des Flachmaterials sind lineare Durchbrechungen 36 gleichmäßig verteilt, die mit den Schnappelementen 26 der Innenwandung 20 korrespondieren und ein Durchgreifen bzw. einen Durchgriff der Schnappelemente durch das Flachmaterial 30 ermöglichen. Gleichzeitig wird durch diese Anordnung eine präzise Ausrichtung des Flachmaterials 30 erreicht. Werden die Durchbrechungen 36 nicht symmetrisch auf der Fläche angeordnet, kann ein falsches Einlegen ausgeschlossen werden. Im Bereich der Ecken des Flachmaterials 30 sind Bohrungen 34 angeordnet. Diese korrespondieren mit in der Figur verdeckten, d. h. nicht gezeigten, Bohrungen in der Innenwandung 20 und ermöglichen einen Mediumsfluss zwischen den verschiedenen Ebenen des Wärmetauschers.

Jeweils auf, als auch unter jedem Flachelement 30 ist weiterhin ein Dichtelement 40 angeordnet. Dieses Dichtelement 40 besteht bevorzugt aus einem für die Anwendung geeigneten thermoelastischen Elastomer. Das Dichtelement 40 erstreckt sich im Wesentlichen in einer Ebene parallel zum Flachmaterial 30 und hat die gleichen äußeren Abmaße. Es weist weiterhin einen umlaufenden Rand 40a und eine mäanderförmige Ausnehmung 42 auf. Diese erstreckt sich über annähernd die gesamte Fläche des Dichtelements 40 und definiert so den Verlauf eines Strömungskanals. Die Mäander 42 werden durch lineare Stege 40b aus Dichtmaterial, die von zwei gegenüberliegenden Randseiten jeweils abwechselnd senkrecht zu dem Rand 40a nach innen geführt wurden, gebildet. Die Stege 40b enden jeweils in einem Abstand von dem Rand 40a, der annähernd dem zum benachbarten Steg 40b entspricht. Jeder zweite dieser Stege 40b weist im dargestellten Ausführungsbeispiel lineare Durchbrechungen 46 auf, die mit den Durchbrechungen 36 in dem Flachmaterial 30 korrespondieren bzw. deckungsgleich mit diesen sind. Im Bereich der Bohrungen 34 des Flachmaterials 30 weist das Dichtelement 40 wenigstens eine weitere Ausnehmung 44 auf. Diese Ausnehmung 44 dient je nach Ausgestaltung dem Verbinden oder Trennen der Strömungsebenen des Wärmetauschers, um einen gewünschten Fluidfluss zu erreichen.

Die obere Abdeckung 50 erstreckt sich im Wesentlichen in einer Ebene parallel zu der Innenwandung 20 und des Flachmaterials 30. Die obere Abdeckung 50 hat eine rechteckige Form, wobei die Abmessungen denen des Flachmaterials 30 entsprechen, sodass auch dieser spielfrei in dem Rahmen 22 der Innenwandung 20 aufgenommen wird. Die Oberseite 50a der oberen Abdeckung 50 ist eben. Die nicht dargestellte Unterseite 50b der oberen Abdeckung 50 weist linear ausgerichtete und in Reihen angeordnete korrespondierende Schnappelemente 56 auf, die später näher erläutert werden.

Die untere Abdeckung 60 entspricht in Ihren Abmessungen denen der oberen Abdeckung 50 und kann wie diese aus dem gleichen Material bestehen, wie die Innenwandung 20. Im Bereich zumindest einer Ecke weist die untere Abdeckung 60 Bohrungen 64 auf. Auf der Außen- oder Unterseite 60a der Abdeckung 60 sind Anschlussstutzen 62 angebracht, die mit den Bohrungen 64 korrespondieren und zum Anschluss von Leitungen und Steuereinrichtungen dienen. Auf der Ober- oder Innenseite 60b der untere Abdeckung 60 sind korrespondierende Schnappelemente bzw. Gegenschnappelemente 66 angeordnet, die den nicht dargestellten korrespondierende Schnappelemente 56 der oberen Abdeckung 50 entsprechen. Sie sind so angeordnet und ausgerichtet, dass sie mit den Durchbrechungen 36, 46 und den Schnappelemente 26 korrespondieren.

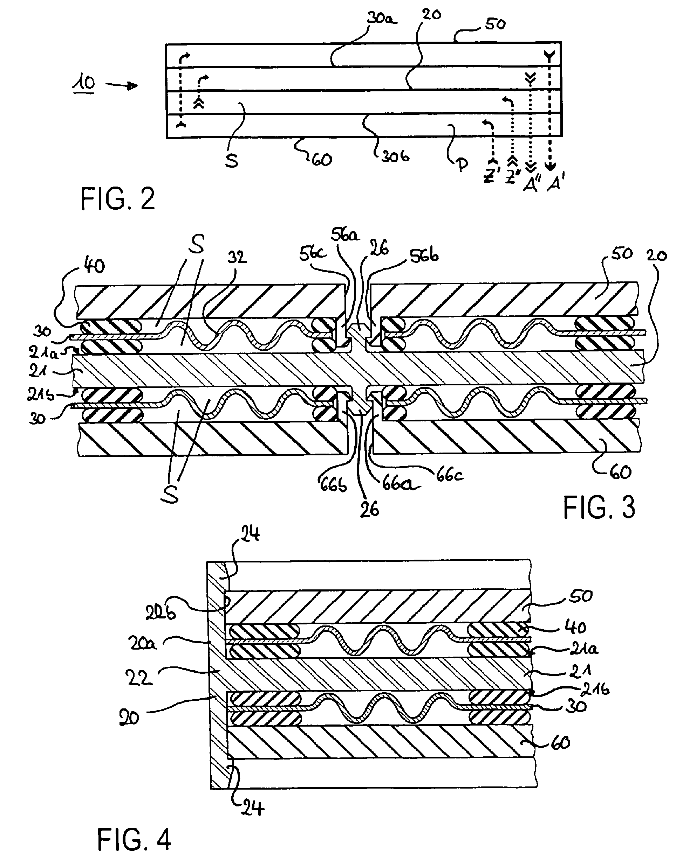

Fig. 2 zeigt anhand einer stark vereinfachten Querschnittdarstellung die Anordnung des Primärkreislauf P zum Sekundärkreislauf S des Plattenwärmetauschers 10. Dabei besitzt der Primärkreislauf P einen Zulauf Z' und einen Ablauf A'. Der Sekundärkreislauf S besitzt einen Zulauf Z" und einen Ablauf A". Selbstverständlich sind prinzipiell zahlreiche unterschiedliche Anordnungen der Fluidführungen zueinander denkbar, bei der besonders bevorzugte in Fig. 2 gezeigte Anordnung ist jedoch der Primärkreislauf außen angeordnet und der Sekundärkreislauf befindet sich sandwichartig dazwischen. Diese Anordnung hat den Vorteil, dass der mit heiße Sekundärkreislauf nach Außen durch den Primärkreislauf abgeschirmt wird und so keine besonderen Wärmeisolationsmaßnahmen notwendig sind, um wärmeempfindliche Bauteile in der Nähe des Plattenwärmetauscher zu schützen. In der Fig. 2 ist der Primärkreislauf durch Pfeile mit Einfachspitze und der Sekundärkreislauf mit Pfeilen mit Doppelspitze angedeutet.

Fig. 3 zeigt eine Schnittdarstellung eines Verbindungsabschnitts des Plattenwärmetauschers der Fig. 1. Detailliert sind die Verbindung der Innenwandung 20 mit der oberen und unteren Abdeckung 50, 60 durch die Schnappelemente 26 und die korrespondierenden Schnappelemente 56, 66 dargestellt.

Wie aus Fig. 3 zu sehen ist, hat ein Schnappelement 26 einen im Wesentlichen rechteckigen Querschnitt und erstreckt sich senkrecht von der Ober- bzw. Unterseite 21 a, 21 b des Flächenelements 21, d. h. der Innenwandung 20. Am in der Darstellung oberen bzw. unteren Ende, also an der von der Innenwandung 20 wegweisenden Seite des Schnappelements 26 sind nach rechts und links gerichtete, d. h. im Wesentlichen parallel zur Ober- bzw. Unterseite 21 a, 21 b verlaufende, hakenförmige Erweiterungen angeordnet.

Die zu einem Schnappelement 26 korrespondierenden (Gegen-) Schnappelemente 56, 66 sind identisch aufgebaut und weisen jeweils von der zweiten und dritten Abdeckung 50, 60 in Richtung der Innenwandung 20. Ein korrespondierenden Schnappelemente 56, 66 besteht aus zwei linearen und parallel verlaufenden Kanten 56a, 56b, 66a, 66b, die an ihren zueinander weisenden Seiten hakenförmige Erweiterungen aufweisen. Diese Haken befinden sich an den von der oberen und unteren Abdeckung 50, 60 wegweisenden Enden der Kanten 56a, 56b, 66a, 66b. Im dargestellten Ausführungsbeispiel ist zwischen den parallel verlaufenden Kanten 56a, 56b, 66a, 66b eine Ausnehmung 56c, 66c vorgesehen, um die Schnappverbindung mit einem passenden Werkzeug lösen zu können. Die parallel verlaufenden Kanten 56a, 56b, 66a, 66b sind dabei so gestaltet, dass die Haken mit den hakenförmigen Erweiterungen des Schnappelements 26 in Eingriff bringbar sind.

Zwischen dem Flachmaterial 30 und den Abdeckungen 20, 50, 60 sind Dichtelemente 40 eingelegt, die aufgrund ihres Anfangsdurchmessers im montierten Zustand durch die entsprechende Auslegung der Schnappverbindungen um einen vorbestimmten Betrag komprimiert sind bzw. werden. Durch die Komprimierung liegen sie dichtend zwischen dem Flachmaterial 30 und den Abdeckungen 20, 50, 60, wodurch sich Strömungskanäle K oberhalb und unterhalb des Flachmaterials 30 bilden. Durch die Komprimierung des Dichtelements 40 wirkt weiterhin eine Zugkraft auf die Schnappverbindung, durch das Auseinanderdrücken der Innenwandung und der oberen Abdeckung 20, 50 und der Innenwandung und unteren Abdeckung 20, 60. Diese Zugkraft ist so ausgelegt, dass ein selbsttätiges Lösen der Schnappverbindung, die durch das Ineinandergreifen der hakenförmigen Erweiterungen der Schnapp- und Gegenschnappelemente 26, 56, 66 entsteht, verhindert wird. Wie ebenfalls zu erkennen ist, weist das Flachmaterial 30 ein Profilierung 32 auf, die im Wesentlichen im Bereich der Strömungskanäle K ausgebildet ist. Auf diese Weise wird die effektive Austausch Oberfläche wesentlich vergrößert, was zu einer Steigerung der Wärmetauscherleistung führt.

Fig. 4 zeigt eine Schnittdarstellung eines Randabschnitts des erfindungsgemäßen Plattenwärmetauschers. Es ist zu sehen, dass sich der Rand 22 der Innenwandung 20 zu beiden Seiten 21 des Flächenelements 21 und senkrecht zu diesem erstreckt. An der oberen Kante der Innenseite 20b, also an der vom Flächenelement 21 wegweisenden Kante, sind Schnappelemente 24 angebracht. Diese sind durch abschnittsweise am Rand umlaufende Haken gebildet, deren hakenförmige Erweiterung zum Flächenelement 21 zeigt. Parallel zur Innenwandung 20 und innerhalb des Randes 22 und in der Reihenfolge sind ein Dichtelement 40, ein Flachmaterial 30, ein weiteres Dichtelement 40 und die obere bzw. untere Abdeckung 50, 60 angeordnet. Durch die Komprimierung der Dichtelemente 40 kann der Rand der oberen bzw. unteren Abdeckung 50, 60 hinter das Schnappelement 24 greifen und dort fixiert werden. Auch in diesem Fall sorgt die Komprimierung der Dichtelemente 40 für eine Abdichtung des Flachmaterials 30 gegenüber den Abdeckungen 20, 50, 60, sowie für eine ausreichende Kraft, um der Schnappverbindung einen sicheren Halt zu geben, wie dies bereits im Bezug auf Fig. 3 erläutert wurde.

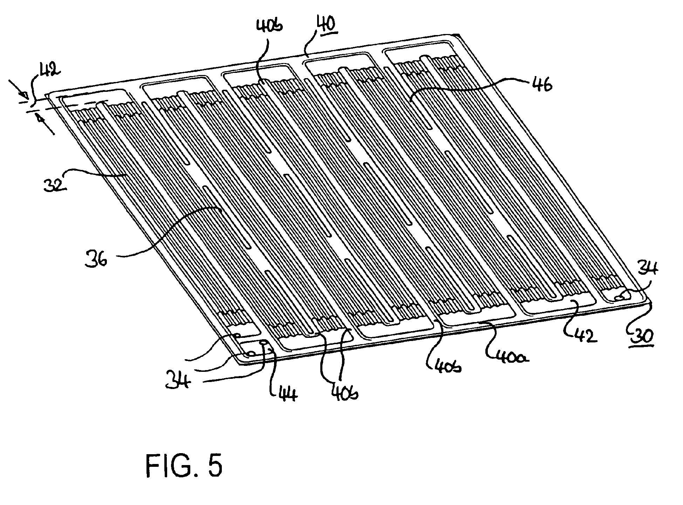

Fig. 5 zeigt eine perspektivische Ansicht des Flachmaterials 30 mit einem aufgespritzten Dichtelement 40 entsprechend Fig. 1. Es ist noch einmal deutlich gezeigt, dass die Mäander 42 durch lineare Stege 40b an Dichtmaterial, die von zwei gegenüberliegenden Randseiten jeweils abwechselnd senkrecht zu dem Rand nach innen geführt wurden, gebildet werden. Die Stege 40b enden jeweils mit einem Abstand von dem Rand 40a, der annähernd dem zum benachbarten Steg 40b entspricht, wodurch sich ein annähernd gleichbreiter Strömungskanal bildet. Jeder zweite dieser Stege 40b weist im dargestellten Ausführungsbeispiel lineare Durchbrechungen 46 auf, die mit den Durchbrechungen 36 in dem Flachmaterial 30 deckungsgleich übereinander liegen.

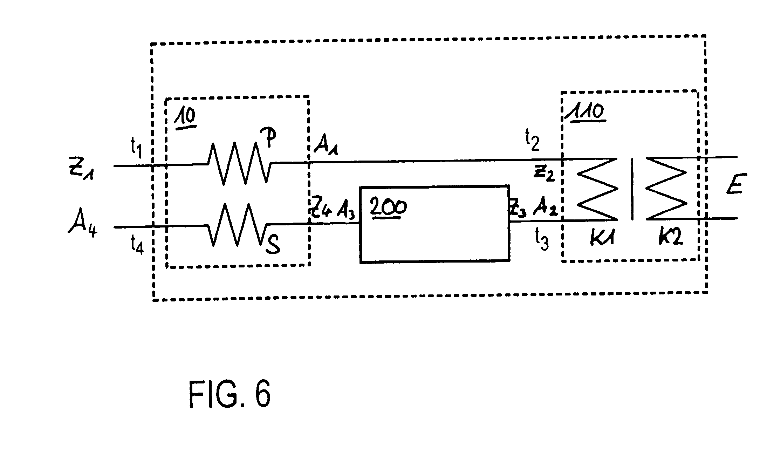

Fig. 6 zeigt ein Blockschaltbild des erfindungsgemäßen Wärmetauschers 10 in einem bevorzugten Einsatz in einem Hausgerät/Haushaltsgerät, welches selbstverständlich auch für einen gewerblichen Einsatz in Frage kommt. Wie dem Blockschaltbild zu entnehmen ist, wird ein Fluid, bevorzugt Wasser, mit einer Temperatur t1 in den Zulauf Z1 des Primärkreislaufs P des erfindungsgemäßen Wärmetauschers 10 geleitet. Das Wasser kann beispielsweise aus einem im Gerät hierfür vorgesehenen Tank (nicht gezeigt) oder separatem Behältnis durch Schwerkraftwirkung oder mittels einer Pumpe zugeführt werden.

Im Primärkreis P wird es aufgrund der höheren Temperatur des Wassers im Sekundärkreises S auf eine Temperatur t2 erwärmt bzw. vorgewärmt. Nach Verlassen des Primärkreis P über den Ablauf A1 des Wärmetauschers 10 wird das vorgewärmte Wasser dem Kreislauf K1 einer Fluidheizung 110 über den Zulauf Z2 mit der Temperatur t2 zugeführt. In der Fluidheizung 110 wird das Wasser durch den Kreislauf K2 weiter erwärmt auf eine Temperatur t3, die für die Zubereitung des Heißgetränkes benötigt wird, dies kann z. B. die geeignete Brühtemperatur für Tee oder Kaffee sein. Mit dieser Temperatur t3 verlässt das Fluid die Fluidheizung 110 über deren Ablauf A2 und wird dem Zulauf Z3 einer Zubereitungseinheit 200 für Heißgetränk, z. B. einer Brühgruppe, zugeführt, in der das Heißgetränk zubereitet wird.

Anschließend verlässt das Heißgetränk die Zubereitungseinheit 200 über deren Ablauf A4 und wird über den Zulauf Z4 dem Sekundärkreislauf S des Wärmetauschers 10 zugeführt. Beim Durchlaufen des Sekundärkreislaufs S gibt das Wasser, d. h. jetzt das Heißgetränk, seine Wärme an das kühlere Wasser, das dem Primärkreislauf über den Zulauf Z1 zufließt, ab.

In der Systemanordnung der Fig. 6 können selbstverständlich noch weitere Funktionseinheiten, wie Sensoren beispielsweise ein Durchflussmesser oder Aktoren beispielsweise eine Pumpe etc. vorgesehen sein.

Die entsprechend Fig. 6 erläuterte Anordnung kann verwendet werden, um beispielsweise den für kalte Erfrischungsgetränke benötigten Grundstoff herzustellen, d. h. beispielsweise Tee oder Kaffee. Besonders vorteilhaft kann der erfindungsgemäße Plattenwärmetauscher als Zusatz zu einem bekannten Heißgetränkegerät ergänzt werden, um als wählbare Alternative zum Beispiel in heißen Jahreszeiten ein frisch zubereitetes erfrischendes Kaltgetränk zuzubereiten. Mit dem erfindungsgemäßen System kann ein mit heißem Wasser zuzubereitendes Getränk nach dessen Zubereitung möglichst effizient wieder abgekühlt werden.

Hieraus ergibt sich auf die Lebensdauer des Haushaltsgeräts bezogen ein weiterer Kostenvorteil. So wird das Wasser im ersten Wärmetauscher 10 beispielsweise von einer Temperatur t1=30°C auf eine Temperatur von t2=85°C erwärmt bzw. vorgewärmt. Im Heizkreis der Fluidheizung 110 muss dann nur noch eine geringfügige Erhöhung der Temperatur von t2=85°C auf die zur Zubereitung des Heißgetränks notwendige Temperatur z. B. t3=92 bis 95°C aufgeheizt werden. Damit kann beispielsweise Kaffee oder Tee aufgebrüht werden. Das Heißgetränk wird in den Sekundärkreislauf S des Wärmetausches 10 geleitet. Dort wird es von ca. t3=90°C auf beispielsweise etwa t4=40°C abgekühlt. Dadurch wird verhindert, dass vom Heißgetränk eine Verbrennungsgefahr ausgeht, da es mit etwa 40°C eine zum Verzehr geeignete Temperatur besitzt. Wird dem Kaffee anschließend Vanilleeis zugefügt, erhält man einen Eiskaffee, bei dem das Eis nicht so schnell schmilzt, da der Kaffee bereits vorgekühlt ist. Ebenso ist das Szenario für Eistee denkbar.

D. h., besonders vorteilhaft wird die im Heißgetränk enthaltene Wärme nicht einfach als Verlustwärme abgeführt, sondern zur energieeffizienten Erwärmung weiter zufließenden Wassers genutzt, wodurch die Energiebilanz der beschriebenen Anordnung gegenüber herkömmlichen Verfahren für den Hausgebrauch viel besser ausfällt. Im Extremfall wurde bisher noch zusätzlich für die Abkühlung beispielsweise in einem Kühlschrank noch zusätzliche Energie aufgewendet. Die benötigte Verzögerungszeit für den Abkühlvorgang noch nicht betrachtet.

Die vorbeschriebene Anordnung ist vor allem deshalb vorteilhaft, weil sie gemeinsam in einem einzigen Gerät untergebracht sein kann. Dadurch ist eine kompakte Bauweise möglich und beispielsweise durch eine entsprechend angepasste Isolierung können weitere Herstell- und Materialkosten gespart werden.

Sind die Dichtelemente 40 nicht, wie in Fig. 5 auf das Flachmaterial 30 aufgespritzt, können alternativ oder zusätzlich, auf dem Flachmaterial 30 und/oder den Abdeckungen 20, 50, 60 entsprechende Nuten bzw. Vertiefungen vorgesehen werden, in welche die Dichtelemente 40 eingelegt werden. So wird ein Verrutschen der Dichtelemente 40 während der Montage verhindert.

Es ist selbstverständlich ebenfalls möglich die Dichtelemente 40 auf eine der Abdeckungen 20, 50, 60 aufzuspritzen. Auch können zur Ausbildung der gewünschten Strömungskanäle verschiedene Dichtelemente 40 verwendet werden, oder ein mehrteiliges Dichtelement.

Die Schnappverbindung kann auch mit anderen Mitteln erreicht werden. Das korrespondierende Schnappelement 56, 66 kann auch durch nur eine Kante 56a, 56b, 66a, 66b realisiert werden, wenn das Schnappelement 26 entsprechend gestaltet ist.

Es wurde offenbart ein verbesserter Aufbau für einen Plattenwärmetauscher zum Austausch von Wärme zwischen zwei strömungsfähigen Medien mit mindestens einem Flachmaterial sowie einer oberen und einer unteren Abdeckung für das Flachmaterial zur Bildung von Strömungskanälen zwischen dem Flachmaterial und der oberen Abdeckung sowie dem Flachmaterial und der unteren Abdeckung und zwischengelegte Dichtelemente für eine mediumsdichte Abdichtung der Strömungskanälen. Mittels Schnappelementen an der oberen Abdeckung und korrespondierender Schnappelemente an der unteren Abdeckung, die durch Ausnehmungen in dem Flachmaterial an vorbestimmten Stellen durchgreifen wird mittels einer vorbestimmten Komprimierung des jeweils zwischengelegten Dichtelements zwischen der jeweiligen Abdeckung und dem Flachmaterial die obere und untere Abdeckung gegeneinander verspannt und gleichzeitig eine Abdichtung der Strömungskanäle des Plattenwärmetauscher erreicht. Eine besondere hier vorgeschlagene Anwendung des Plattenwärmetauschers besteht aus einer Kombination mit einer Fluidheizung, wobei mittels der Kombination das weiter vorgeschlagene Verfahren zum besonders energieeffizienten Herstellen von heiß zuzubereitenden Kaltgetränken, insbesondere in Haushaltsgeräten zur Nahrungszubereitung, umgesetzt werden kann.

## Patentansprüche

1. Plattenwärmetauscher zum Austausch von Wärme zwischen zwei strömungsfähigen Medien, bestehend aus
mindestens einem Flachmaterial (30) sowie einer oberen und einer unteren Abdeckung (20, 50, 60) für das Flachmaterial (30) zur Bildung von Strömungskanälen (K) zwischen dem Flachmaterial (30) und der oberen Abdeckung (20, 50) sowie dem Flachmaterial und der unteren Abdeckung (20, 60) und zwischengelegte Dichtelemente (40) für eine mediumsdichte Abdichtung der Strömungskanäle (K), **dadurch gekennzeichnet** daβ
die obere Abdeckung (20, 50) Schnappelemente (26, 56) und die untere Abdeckung (20, 60) korrespondierende Schnappelemente (26, 66) aufweist;
wobei das Flachmaterial (30) Ausnehmungen (36) an vorbestimmten Stellen zum Durchgreifen der Schnappelemente (26) und/oder der korrespondierenden Schnappelemente (56, 66) durch das Flachmaterial (30) aufweist;
wobei die jeweiligen zwischengelegten Dichtelemente (40) durch Verrasten der Schnappelemente (26, 56) und korrespondierenden Schnappelemente (26, 66) zur Verspannung des jeweiligen Flachmaterials und der Abdeckungen (20, 50, 60) komprimiert sind; und
wobei mittels des jeweils zwischengelegten Dichtelements (40) zwischen der jeweiligen Abdeckung (20, 50, 60) und dem Flachmaterial (30) die obere und untere Abdeckung (20, 50, 60) durch eine vorbestimmte Komprimierung der Dichtelemente (40) gegeneinander verspannt sind.

2. Plattenwärmetauscher nach Anspruch 1,
wobei die obere Abdeckung (20, 50) und/oder untere Abdeckung (20, 60) jeweilige weitere Schnappelemente aufweist und weitere Strömungskanäle mittels eines weiteren Flachmaterials, einer entsprechenden weiteren Abdeckung mit korrespondierenden Schnappelementen und entsprechender weitere Strömungskanalverlauf definierende weitere zwischengelegte Dichtelemente für die mediumsdichte Abdichtung der Strömungskanälen aufweist.

3. Plattenwärmetauscher nach den Ansprüchen 1 und 2,
wobei der Verlauf der Strömungskanäle (K) durch die zwischengelegten Dichtelemente (40) festgelegt ist, und
wobei das Flachmaterial (30) bevorzugt zumindest im Bereich der Strömungskanäle (K) eine Profilierung (32) zur Vergrößerung der effektiven Wärmeaustauschfläche aufweist.

4. Plattenwärmetauscher nach den Ansprüchen 1 bis 3,
wobei die Schnappelemente (26) lineare hakenförmige Rastelemente aufweisen, die mit den ebenfalls linearen lang gestreckten korrespondierenden Schnappelementen (56, 66) Rastelementpaare für eine Rastverbindung bilden.

5. Plattenwärmetauscher nach den Ansprüchen 1 bis 4,
wobei in dem Flachmaterial (30) und den Abdeckungen (20, 50, 60) korrespondierende Öffnungen (34, 44, 64) zur Bildung von jeweiligen Mündungen für Mediumszuläufe und Mediumsabläufe für die Strömungskanäle (K) vorgesehen sind,
wobei die Öffnungen (34, 44, 64) der Mündungen für die Mediumszuläufe und Mediumsabläufe bevorzugt in einem Bereich der Abdeckungen (20, 50, 60) und des Flachmaterials (30) zusammengefasst sind, und
wobei die Öffnungen (34, 44, 64) der Mündungen für die Mediumszuläufe und Mediumsabläufe besonders bevorzugt in dem Bereich der Abdeckungen (20, 50, 60) und des Flachmaterials (30), in dem sie zusammengefasst sind, durch ein Anschlusselement gemeinsam anschließbar sind.

6. Plattenwärmetauscher nach einem der vorhergehenden Ansprüche,
wobei das Flachmaterial (30) und/oder die Abdeckungen (20, 50, 60) der Form der zwischengelegten Dichtelemente (40) angepasste Vertiefungen zur Lagefixierung der Dichtelemente (40) aufweisen.

7. Plattenwärmetauscher nach einem der vorhergehenden Ansprüche,
wobei das Flachmaterial (30) aus einem Metall,
wobei die Abdeckungen (20, 50, 60) aus einem Kunststoff, und wobei die Dichtungselemente (40) aus einem geeigneten thermoelastischen Elastomer bestehen.

8. Plattenwärmetauscher nach einem der vorhergehenden Ansprüche,
wobei ein erstes und ein zweites parallel zueinander angeordnetes Flachmaterial (30a, 30b) durch eine dazwischenliegende Innenwandung (20) zur Ausbildung von ersten und zweiten Strömungskanälen (K) voneinander getrennt sind, und
wobei die Innenwandung (20) bevorzugt sich zu beiden Seiten im Wesentlichen senkrecht zur Innenwandung (20) erstreckende Schnappelemente (26) aufweist.

9. Plattenwärmetauscher nach Anspruch 8,
wobei die obere und die unter Abdeckung (50, 60) zur Bildung dritter und vierter Strömungskanäle (K) jeweils parallel zu dem ersten und zweiten Flachmaterial (30a, 30b) angeordnet sind, und
wobei die Innenwandung (20) bevorzugt sich zu beiden Seiten im Wesentlichen senkrecht zur Innenwandung (20) erstreckende Schnappelemente (26) aufweist.

10. Plattenwärmetauscher nach den Ansprüchen 8 oder 9,
wobei die obere und untere Abdeckung (50, 60) jeweils in Richtung der Innenwandung (20) gerichtete und mit deren Schnappelementen (26) korrespondierende Schnappelemente (56, 66) aufweisen.

11. Plattenwärmetauscher nach den Ansprüchen 8 bis 10,
wobei zur mediumsdichten Abdichtung der Strömungskanäle (K) gegeneinander sowie nach Außen und zur Festlegung des Verlaufs der Strömungskanäle (K) jeweilige Dichtelemente (40) zwischen die jeweiligen Flachmaterialien (30a, 30b) und die jeweils benachbarte ober und untere Abdeckungen (50, 60) bzw. Innenwandung (20) eingelegt sind, und
wobei die jeweiligen zwischengelegten Dichtelemente (40) bevorzugt mittels Verrasten der Schnappelemente (26) und korrespondierenden Schnappelemente (56, 66) in vorbestimmter Weise zur mediumsdichten Abdichtung sowie zur Verspannung der Flachmaterialien (30a, 30b) und der Abdeckungen komprimiert sind.

12. Plattenwärmetauscher nach den Ansprüchen 8 bis 11,
wobei die obere und untere Abdeckung (50, 60) sowohl entlang ihres Flächenrandes als auch auf der Fläche angeordnet Schnappelemente (56, 66) aufweisen, und
wobei die Dichtelemente (40) überwiegend im Bereich der Schnapp-und Gegenschnappelemente (26, 56, 66) angeordnet sind.

13. Plattenwärmetauscher nach Anspruch 8 bis 12,
wobei die Innenwandung (20) auf beiden Seiten einen umlaufenden erhöhten Rand (22) aufweist, der die Flachelemente (21) und die obere und untere Abdeckung (50, 60) einfasst,
wobei der erhöhte Rand (22) der Innenwandung (20) bevorzugt zu den entlang des Flächenrandes der oberen und unteren Abdeckungen (50, 60) angeordneten Schnappelementen korrespondierende Schnappelemente (24) aufweist.

14. Anordnung aus einem Plattenwärmetauscher (10) gemäß einem der Ansprüche 1 bis 13 und einer Fluidheizung (110) in einer Vorrichtung zur Herstellung eines Heißgetränks,
wobei der Plattenwärmetauscher (10) und die Fluidheizung (110) derart miteinander verbunden sind, dass ein Ablauf (A1) eines ersten Kreislaufs (P) des Plattenwärmetauschers (10) mit einem Zulauf (Z2) der Fluidheizung (110) verbunden ist, der Ablauf (A2) der Fluidheizung (110) mit einem Zulauf (Z3) einer Brühgruppe (200) zur Herstellung des Heißgetränks verbunden ist, und dass ein Ablauf (A3) der Brühgruppe (200) mit einem Zulauf (Z4) des zweiten Kreislaufs (S) des Plattenwärmetauschers (10) verbunden ist, und
wobei im Plattenwärmetauscher (10) der erste und zweite Kreislauf (P, S) zur gegenseitigen Wärmeübertragung eingerichtet sind, und ein Zulauf (Z1) des ersten Kreislaufes (P) zur Zuführung eines Fluids in die Anordnung und ein Ablauf (A4) des zweiten Kreislaufs (S) zur Abgabe des Fluids aus der Anordnung bestimmt sind.

## Claims

1. Plate heat exchanger for exchanging heat between two flowable media, consisting of at least one flat material (30) and an upper and a lower cover (20, 50, 60) for the flat material (30) in order to form flow channels (K) between the flat material (30) and the upper cover (20, 50) and between the flat material and the lower cover (20, 60) and interposed sealing elements (40) for sealing the flow channels (K) in a medium-tight manner, **characterised in that** the upper cover (20, 50) comprises snap elements (26, 56) and the lower cover (20, 60) comprises corresponding snap elements (26, 66), the flat material (30) comprising recesses (36) at predetermined locations for engaging the snap elements (26) and/or the corresponding snap elements (56, 66) through the flat material (30), the interposed sealing elements (40) being compressed by locking of the snap elements (26, 56) and corresponding snap elements (26, 66) for clamping each flat material and the covers (20, 50, 60), and, by means of the sealing element (40) interposed in each case between each cover (20, 50, 60) and the flat material (30), the upper and lower covers (20, 50, 60) being clamped against one another by a predetermined compression of the sealing elements (40).

2. Plate heat exchanger according to claim 1, wherein each upper cover (20, 50) and/or lower cover (20, 60) comprises further snap elements and further flow channels by means of a further flat material, a corresponding further cover having corresponding snap elements and corresponding further interposed sealing elements, defining the flow channel course, for sealing the flow channels in a medium-tight manner.

3. Plate heat exchanger according to claims 1 and 2, wherein the course of the flow channels (K) is determined by the interposed sealing elements (40), and wherein the flat material comprises, preferably at least in the region of the flow channels (K), a profiling (32) for extending the effective heat exchange surface area.

4. Plate heat exchanger according to claims 1 to 3, wherein the snap elements (26) comprise linear hook-shaped latching elements which form latching element pairs together with the corresponding likewise linear, elongate snap elements (56, 66) for a latching connection.

5. Plate heat exchanger according to claims 1 to 4, wherein corresponding openings (34, 44, 64) are provided in the flat material (30) and the covers (20, 50, 60) in order to form ports for medium inlets and medium outlets for the flow channels (K), wherein the openings (34, 44, 64) of the ports for the medium inlets and medium outlets are preferably included in a region of the covers (20, 50, 60) and of the flat material (30), and wherein the openings (34, 44, 64) of the ports for the supply and discharge of medium can particularly preferably be connected by a connecting element in the region of the covers (20, 50, 60) and of the flat material (30) in which they are included.

6. Plate heat exchanger according to any of the preceding claims, wherein the flat material (30) and/or the covers (20, 50, 60) comprise depressions for holding the sealing elements (40) in position, which depressions are adapted to the shape of the interposed sealing elements (40).

7. Plate heat exchanger according to any of the preceding claims, wherein the flat material (30) is made of metal, wherein the covers (20, 50, 60) are made of a plastics material and wherein the sealing elements (40) are made of a suitable thermo-resilient elastomer.

8. Plate heat exchanger according to any of the preceding claims, wherein a first and a second mutually parallel flat material (30a, 30b) are separated from one another by an interposed internal wall (20) for constructing first and second flow channels (K), and wherein the internal wall (20) preferably comprises snap elements (26) which extend on either side substantially perpendicular to the internal wall (20).

9. Plate heat exchanger according to claim 8, wherein the upper and lower covers (50, 60) are each arranged parallel to the first and second flat materials (30a, 30b) to form third and fourth flow channels (K), and wherein the internal wall (20) preferably comprises snap elements (26) which extend on either side substantially perpendicular to the internal wall (20).

10. Plate heat exchanger according to either claim 8 or claim 9, wherein the upper and lower covers (50, 60) comprise snap elements (56, 66) which are each oriented towards the internal wall (20) and correspond to the snap elements (26) thereof.

11. Plate heat exchanger according to claims 8 to 10, wherein sealing elements (40) are inserted between each flat material (30a, 30b) and the adjacent upper and lower covers (50, 60) or internal wall (20) in each case, in order to seal the flow channels (K) in a medium-tight manner against one another and outwardly and to determine the course of the flow channels (K), and wherein the interposed sealing elements (40) are preferably compressed by means of the locking of the snap elements (26) and corresponding snap elements (56, 66) in a predetermined manner for the medium-tight sealing and for the clamping of the flat materials (30a, 30b) and the covers.

12. Plate heat exchanger according to claims 8 to 11, wherein the upper and lower covers (50, 60) comprise snap elements (56, 66) which are arranged both along the surface edge thereof and on the surface, and wherein the sealing elements (40) are predominantly arranged in the region of the snap and counter-snap elements (26, 56, 66).

13. Plate heat exchanger according to claims 8 to 12, wherein the two sides of the internal wall (20) comprise a peripheral raised edge (22) which borders the flat elements (21) and the upper and lower covers (50, 60), wherein the raised edge (22) of the internal wall (20) preferably comprises snap elements (24) which correspond to the snap elements arranged along the surface edge of the upper and lower covers (50, 60).

14. Arrangement consisting of a plate heat exchanger (10) according to any of claims 1 to 13 and a fluid heating installation (110) in a device for producing a hot beverage, wherein the plate heat exchanger (10) and the fluid heating installation (110) are interconnected in such a way that an outlet (A1) of a first circuit (P) of the plate heat exchanger (10) is connected to an inlet (Z2) of the fluid heating installation (110), the outlet (A2) of the fluid heating installation (110) is connected to an inlet (Z3) of the brewing assembly (200) for producing the hot beverage, and an outlet (A3) of the brewing assembly (200) is connected to an inlet (Z4) of the second circuit (S) of the plate heat exchanger (10), and wherein the first and second circuits (P, S) are set up in the plate heat exchanger (10) for mutual heat transfer, and an inlet (Z1) of the first circuit (P) is intended for supplying a fluid to the arrangement and an outlet (A4) of the second circuit (S) is intended for discharging fluid from the arrangement.

## Revendications

1. Echangeur de chaleur à plaques pour l'échange de chaleur entre deux fluides aptes à s'écouler, constitué de
au moins un matériau (30) plat ainsi qu'un recouvrement (20, 50, 60) supérieur et un recouvrement (20, 60) inférieur du matériau (30) plat pour la formation de canaux (K) d'écoulement entre le matériau (30) plat et le recouvrement (20, 50) supérieur ainsi qu'entre le matériau plat et le recouvrement (20, 60) inférieur et d'éléments (40) d'étanchéité interposés pour une étanchéité à l'épreuve d'un fluide des canaux (K) d'écoulement, **caractérisé en ce que**
le recouvrement (20, 50) supérieur a des éléments (26, 56) d'encliquetage et le recouvrement (20, 60) inférieur a des éléments (26, 66) d'encliquetage correspondants ;
dans lequel le matériau (30) plat a des évidements (36) en des endroits déterminés à l'avance pour l'accrochage des éléments (26) d'encliquetage et/ou des éléments (56, 66) d'encliquetage correspondants à travers le matériau (30) plat ;
dans lequel les éléments (40) d'étanchéité interposés sont comprimés par un encliquetage des éléments (26, 56) d'encliquetage et des éléments (26, 66) d'encliquetage correspondants pour le blocage du matériau plat et des recouvrements (20, 50, 60) ; et
dans lequel au moyen des éléments (40) d'étanchéité interposés entre le recouvrement (20, 50, 60) respectif et le matériau (30) plat, le recouvrement (20, 50) supérieur et le recouvrement (20, 60) inférieur sont bloqués l'un par rapport à l'autre par une compression déterminée à l'avance des éléments (40) d'étanchéité.

2. Echangeur de chaleur à plaques suivant la revendication 1,
dans lequel le recouvrement (20, 50) supérieur et/ou le recouvrement (20, 60) inférieur ont respectivement d'autres éléments d'encliquetage et d'autres canaux d'écoulement au moyen d'un autre matériau plat, d'un autre recouvrement correspondant ayant des éléments d'encliquetage correspondants et d'autres éléments d'étanchéité interposés définissant d'une manière correspondante d'autres tracés de canal d'écoulement pour l'étanchéité étanche à un fluide des canaux d'écoulement.

3. Echangeur de chaleur à plaques suivant les revendications 1 et 2,
dans lequel le tracé des canaux (K) d'écoulement est fixé par les éléments (40) d'étanchéité interposés, et
dans lequel le matériau (30) plat a de préférence, au moins dans la zone des canaux (K) d'écoulement, un profilage (32) pour augmenter la surface efficace d'échange de chaleur.

4. Echangeur de chaleur à plaques suivant les revendications 1 à 3,
dans lequel les éléments (26) d'encliquetage ont des éléments d'encliquetage linéaires en forme de crochet, qui forment avec les éléments (56, 66) d'encliquetage correspondants s'étendant également en longueur de manière linéaire des paires d'éléments d'encliquetage pour une liaison par encliquetage.

5. Echangeur de chaleur à plaques suivant les revendications 1 à 4,
dans lequel il est prévu dans le matériau (30) plat et dans les recouvrements (20, 50, 60) des ouvertures (34, 44, 64) correspondantes, de formation d'embouchures respectives d'entrée de fluide et de sortie de fluide pour les canaux (K) d'écoulement,
dans lequel les ouvertures (34, 44, 64) des embouchures pour les entrées de fluide et pour les sorties de fluide sont rassemblées, de préférence dans une zone des recouvrements (20, 50, 60) et du matériau (30) plat et
dans lequel les ouvertures (34, 44, 64) des ouvertures pour les entrées de fluide et les sorties de fluide peuvent être raccordées en commun par un élément de raccordement, d'une manière particulièrement préférée dans la zone des recouvrements (20, 50, 60) et du matériau (30) plat, dans laquelle elles sont rassemblées.

6. Echangeur de chaleur à plaques suivant l'une des revendications précédentes,
dans lequel le matériau (30) plat et/ou les recouvrements (20, 50, 60) ont, pour l'immobilisation en position des éléments (40) d'étanchéité, la forme de cavités adaptées aux éléments (40) d'étanchéité interposés.

7. Echangeur de chaleur à plaques suivant l'une des revendications précédentes,
dans lequel le matériau (30) plat est en un métal,
dans lequel les recouvrements (20, 50, 60) sont en une matière plastique et dans lequel les éléments (40) d'étanchéité sont en un élastomère thermoélastique approprié.

8. Echangeur de chaleur à plaques suivant l'une des revendications précédentes,
dans lequel un premier matériau (30a) plat et un deuxième matériau (30b) plat disposés parallèlement entre eux sont séparés l'un de l'autre par une paroi (20) intérieure interposée pour la formation de premiers et de deuxièmes canaux (K) d'écoulement et
dans lequel la paroi (20) intérieure a, de préférence, sur les deux faces, des éléments (26) d'encliquetage s'étendant sensiblement perpendiculairement à la paroi (20) intérieure.

9. Echangeur de chaleur à plaques suivant la revendication 8,
dans lequel le recouvrement (50) supérieur et le recouvrement (60) inférieur sont, pour la formation de troisièmes et de quatrièmes canaux (K) d'écoulement, disposés respectivement parallèlement au premier et au deuxième matériau (30a, 30b) et
dans lequel la paroi (20) intérieure a, de préférence, sur les deux faces, des éléments (26) d'encliquetage s'étendant sensiblement perpendiculairement à la paroi (20) intérieure.

10. Echangeur de chaleur à plaques suivant les revendications 8 ou 9,
dans lequel le recouvrement (50) supérieur et le recouvrement (60) inférieur ont respectivement des éléments (56, 66) d'encliquetage dirigés dans la direction de la paroi (20) intérieure et correspondants à leurs éléments (26) d'encliquetage.

11. Echangeur de chaleur à plaques suivant les revendications 8 à 10,
dans lequel, pour l'étanchéité étanche à un fluide des canaux (K) d'écoulement entre eux ainsi que vers l'extérieur et pour la fixation du tracé des canaux (K) d'écoulement, des éléments (40) d'étanchéité sont insérés entre les matériaux (30a, 30b) plats respectifs et les recouvrements (50, 60) supérieur et inférieur voisins respectifs ou la paroi (20) intérieure et
dans lequel les éléments (40) d'étanchéité interposés respectifs sont comprimés au moyen d'un encliquetage des éléments (26) d'encliquetage et des éléments (56, 66) d'encliquetage correspondants, d'une manière déterminée à l'avance, pour l'étanchéité étanche à un fluide ainsi que pour le blocage des matériaux (30a, 30b) plats et des recouvrements.

12. Echangeur de chaleur à plaques suivant les revendications 8 à 11,
dans lequel le recouvrement (50) supérieur et le recouvrement (60) inférieur ont des éléments (56, 66) d'encliquetage, à la fois le long de leur bord et sur leur surface et
dans lequel les éléments (40) d'étanchéité sont disposés d'une manière prépondérante dans la zone des éléments (26, 56, 66) d'encliquetage et de contre encliquetage.

13. Echangeur de chaleur à plaques suivant les revendications 8 à 12,
dans lequel la paroi (20) intérieure a sur les deux faces, un bord (22) surélevé et faisant le tour, qui enchâsse les éléments (21) plats et les recouvrements (50, 60) supérieur et inférieur,
le rebord (22) surélevé de la paroi (20) intérieure ayant de préférence des éléments (24) d'encliquetage correspondants aux éléments d'encliquetage disposés le long du bord de la surface des recouvrements (50, 60) supérieur et inférieur.

14. Agencement composé d'un échangeur de chaleur (10) à plaques suivant l'une des revendications 1 à 13 et d'un chauffage (110) de fluide dans un dispositif de production d'une boisson chaude,
dans lequel l'échangeur de chaleur (10) à plaques et le chauffage (110) de fluide sont reliés l'un à l'autre, de manière à ce qu'une sortie (A1) d'un premier circuit (P) de l'échangeur de chaleur (10) à plaques communique avec une entrée (Z2) du chauffage (110) de fluide, de manière à ce que la sortie (A2) du chauffage (110) de fluide communique avec une entrée (Z3) d'un groupe (200) d'infusion pour la préparation de la boisson chaude, et de manière à ce qu'une sortie (A3) du groupe (200) d'infusion communique avec une entrée (Z4) du deuxième circuit (S) de l'échangeur de chaleur (10) à plaques et
dans lequel dans l'échangeur de chaleur (10) à plaques, le premier et le deuxième circuits (P, S) sont agencés pour une transmission de chaleur mutuelle et une entrée (Z1) du premier circuit (P) est destinée à apporter un fluide dans l'agencement et une sortie (A4) du deuxième circuit (S) est destinée à évacuer le fluide de l'agencement.
